Europäisches Patentamt

European Patent Office

Office européen des brevets

(19)

(11) Numéro de publication: **0 003 449**
**B1**

(12)

# FASCICULE DE BREVET EUROPEEN

(45) Date de publication du fascicule du brevet: **16.06.82**

(51) Int. Cl.³: **B 32 B 27/08, B 29 F 3/12**

(21) Numéro de dépôt: **79400018.2**

(22) Date de dépôt: **09.01.79**

(54) **Procédé de fabrication par coextrusion d'un matériau composite polyfluorure de vinylidène et polyuréthane.**

(30) Priorité: **20.01.78 FR 7801590**

(43) Date de publication de la demande:
**08.08.79 Bulletin 79/16**

(45) Mention de la délivrance du brevet:
**16.06.82 Bulletin 82/24**

(84) Etats contractants désignés:
**BE CH DE FR GB**

(56) Documents cités:
**FR - A - 2 130 569
GB - A - 1 238 215
US - A - 3 801 429
US - A - 4 051 293**

(73) Titulaire: **P C U K PRODUITS CHIMIQUES UGINE KUHLMANN**
**Service Propriété Industrielle Tour Manhattan**
**F-92087 Paris La Defense 2 Cédex 21 (FR)**

(72) Inventeur: **Strassel, Albert**
**30 Rue Pasteur**
**F-69600 Oullins (FR)**

(74) Mandataire: **Monceaux, Pierre et al,**
**PRODUITS CHIMIQUES UGINE KUHLMANN**
**Service Propriété Industrielle**
**Tour Manhattan Cédex 21 F-92087 Paris La Defense (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**0 003 449**

Procédé de fabrication par coextrusion d'un matériau composite polyfluorure de vinylidène et polyuréthane

La présente invention concerne un procédé de fabrication d'un matériau composite polyfluorure de vinylidène, polymère présenté sous la forme abrégée: PVF$_2$, — polyuréthane obtenu par coextrusion et, par extension, coextrusion-soufflage cette dernière variante étant assimilée à la coextrusion et ne s'en différenciant que par l'injection d'un gaz à l'intérieur de l'objet extrudé encore chaud afin d'en augmenter son volume, ou, lui donner une forme particulière.

La technique de coextrusion d'au moins deux thermoplastiques est bien connue, elle est en particulier décrite dans POLYMER PLASTICS TECHNOLOGY AND ENGINEERING, Volume 3, pages 49 à 68: "Coextruded films — Process and Properties" par John E. GUILLOTTE.

De façon générale, on connaît trois façons de procéder à la coextrusion des thermoplastiques à partir d'extrudeuses conventionnelles en nombre égal au nombre de polymères à extruder. Le premier procédé consiste à extruder séparément les polymères et à les réunier en sortie de filières. Le deuxième procédé consiste à alimenter une filière unique au moyen d'au moins deux extrudeuses, la filière comportant autant de canaux qu'il y a d'extrudeuses, et par conséquent de polymères à extruder. Les flux de polymères se rejoignent au niveau des lèvres de la filière donc sensiblement juste avant la sortie de celle-ci. Le troisième procédé consiste à alimenter un répartiteur de flux au moyen du nombre voulu d'extrudeuses. Dans ce répartiteur les polymères se réunissent en un flux unique qui alimente la filière. Dans ces procédés les débits respectifs des extrudeuses permettent habituellement de régler les épaisseurs relatives des polymères extrudés.

Alors que de nombreux polymères peuvent être coextrudés, le PVF$_2$ n'a pu être associé de façon systématique avec une adhérence correcte, aux autres polymères au moyen de cette technique. La raison provient probablement du manque de compatibilité du PVF$_2$ avec la plupart des autres polymères et du manque d'adhérence bien connu des résines fluorées avec la majorité des polymères extrudables. A titre d'exemples sont citées dans le brevet des Etats-Unis d'Amérique 3 801 429 au moins 35 associations coextrudables d'un polymère avec le PVF$_2$. Or seules les 10 associations à base de résines acryliques ou méthacryliques, résines connues comme compatibles avec le PVF$_2$, permettent d'obtenir par coextrusion un matériau composite homogène.

Il est également connu d'extruder du PVF$_2$ avec un polyuréthane d'après le brevet GB 1 238 215, mais il s'agit d'une coextrusion selon le 1er procédé dans lequel il n'est pas nécessairement recherché une adhérence entre les 2 matériaux.

Selon la présente invention, il est maintenant possible d'obtenir par coextrusion un matériau composite de PVF$_2$-polyuréthane, les polymères adhérant l'un à l'autre sans avoir à utiliser un intermédiaire de collage, à condition de coextruder un PVF$_2$ possédant une viscosité bien spécifique et un polyuréthane thermoplastique dont la viscosité est adaptée à ce e du PVF$_2$. Il est en effet constaté que si le PVF$_2$ est trop fluide ou trop visqueux par rapport au polyuréthane, l'interpénétration des polymères au cours de la coextrusion ne se faisant pas, il n'est pas possible d'obtenir un matériau composite dont les polymères adhèrent l'un à l'autre.

En pratique ce procédé de fabrication de matériau composite PVF$_2$-polyuréthane est caractérisé en ce que les flux de PVF$_2$ et de polyuréthane en sortie de deux extrudeuses sont réunis au plus tard au niveau des lèvres d'une filière unique, le PVF$_2$ extrudé se trouvant dans une gamme de viscosité apparente à 200°C telle qu'il présente au moins pour deux gradients de vitesse du tableau ci-après des viscosités apparentes respectivement incluses entre les deux viscosités apparentes extrêmes inidiquées,

| Gradient de vitesse sec$^{-1}$ | Valeur des viscosités apparentes en poises | |
|---|---|---|
| | minimum | maximum |
| 3,54 | 30  10$^3$ | 200  10$^3$ |
| 11,81 | 18  10$^3$ | 93  10$^3$ |
| 35,4 | 11  10$^3$ | 47  10$^3$ |
| 118 | 6,5  10$^3$ | 21  10$^3$ |
| 354 | 3,9  10$^3$ | 10  10$^3$ |
| 1 181 | 2,3  10$^3$ | 4,5  10$^3$ |

et le polyuréthane extrudé possédant une viscosité apparente à 200°C au maximum quatre fois moindre que celle du PVF$_2$ pour les gradients de vitesse ayant servi à définir ce dernier.

2

Les viscosités apparentes dont il est fait état précédemment sont mesurées de façon connue au moyen d'un rhéomètre capillaire, en tenant compte de la correction de RABINOWITCH appliquée aux liquides newtoniens.

Pour les besoins de l'invention on entend également par $PVF_2$, non seulement l'homopolymère, mais encore les copolymères contenant au moins 70% en poids de $PVF_2$ ou les mélanges de $PVF_2$ avec d'autres polymères. La condition essentielle est que ces copolymères ou mélanges possèdent les caractéristiques de viscosités précédemment citées.

Les polyuréthanes thermoplastiques coextrudés avec le $PVF_2$ sont de préférence des polyuréthanes linéaires ou faiblement réticulés obtenus de façon générale par réaction d'un diisocyanate organique avec un diol polyéther et/ou polyester de poids moléculaire compris entre 500 et 6000, l'allongement des chaines étant provoqué au moyen de molécules difonctionnelles telles que les diols de faible poids moléculaire, des diacides, des diamines, de l'eau, ou leurs mélanges, en présence ou non de catalyseur. Parmi la famille des diols polyéthers ou polyesters habituellement connus pour ce genre de réaction avec les diisocyanates, on peut également inclure les polyols polyethers ou polyesters copolymérisés ou greffés avec l'acrylonitrile, l'acrylonitrile-styrène, le méthylstyrène, le chlorure de vinyle, le chlorure de vinylidène ou le méthacrylate de méthyle.

L'appareillage utilisé à le réalisation du matériau composite $PVF_2$-polyuréthane est constitué d'extrudeuses, de filière et éventuellement de répartiteur de flux classiques et couramment employés dans la technique de coextrusion des polymères thermoplastiques. Comme déjà signalé, du réglage du débit de chacune des extrudeuses dépend l'épaisseur de chacune des couches de polymère. Pour les besoins de l'invention la température de la filière est comprise entre 180°C et 230°C, les températures des extrudeuses étant celles habituellement prevues dans le cas de la simple extrusion de chacun des polymères.

Afin que l'adhérence finale entre la $PVF_2$ et le polyuréthane soit bien assurée, il est recommandé de procéder à la coextrusion de ces deux polymères de façon telle que les flux de chacune des matières sortant des extrudeuses soient réunis au plus tard au niveau des lèvres de la filière. Il est même préférable que les flux de $PVF_2$ et de polyuréthane en sortie d'extrudeuse cheminent ensemble et en contact sur une certaine longueur avant d'atteindre les lèvres de la filière. Das ce dernier cas à la place d'une filière à plusieurs canaux, on interpose un répartiteur de flux entre le sortie des extrudeuses et une filière à canal unique.

Comme dans le cas de polymères habituellement coextrudables, il est possible d'incorporer au $PVF_2$ et/ou polyuréthane les adjuvants classiques comme les charges, les pigments, les plastifiants, les stabilisants et autres. Il est également possible d'incorporer au polyuréthane divers polymères ou copolymères, à condition toutefois que le mélange contienne au moins 50% en poids de polyuréthane et conserve une viscosité apparente identique à celle que devrait avoir de préférence le polyuréthane en fonction du $PVF_2$.

Les matériaux composites $PVF_2$-polyuréthane obtenus selon le procédé décrit se présentent sous toutes les formes réalisables habituellement par coextrusion des polymères. Ils peuvent être par exemple sous forme film, plaque, tube, profilé, gaine, récipient de forme quelconque obtenu par coextrusion-soufflage.

Les exemples suivants illustrent l'objet de l'invention. Pour tous les exemples les mesures de viscosité ont été effectuées au moyen d'un rhéomètre capillaire INSTRON Model 3211 avec un capillaire d'environ 50,8 mm (2 in.) de longueur pour un diamètre de buse d'environ 1,27 mm (0,05 in).

## Exemple 1

On dispose de deux extrudeuses (type SAMAFOR B.30) de longueur de vis de 20 fois le diamètre et de taux de compression 3,5 de telle sorte qu'elles alimentent un cylindre répartiteur de flux fixé lui-même à une filière plate ordinaire destinée à fabriquer une plaque de 0,6 mm d'épaisseur et de 300 mm de largeur.

De la première machine on extrude un $PVF_2$ (FORAFLON 1000 HD de la Société PRODUITS CHIMIQUES UGINE KUHLMANN) de viscosité apparente à 200°C de $75.10^3$ et $18,4.10^3$ poises pour des gradients de vitesse en $sec^{-1}$ respectivement de 11,8 et 118. Les températures de chauffe affichées pour cette extrudeuse sont de 180°C en entrée, 200°C pour le premier corps et 200°C pour le deuxième corps.

De la seconde machine on extrude un polyuréthane thermoplastique (ESTANE 58271) de viscosité apparente à 200°C de $2,5. 10^3$ et $1,2.10^3$ poises pour des gradients de vitesse en $sec^{-1}$ respectivement de 11,8 et 118. Les températures de chauffe affichées pour cette extrudeuse sont en partant de l'entrée de: 150°C—160°C—180°C.

La filière et le répartiteur de flux sont maintenus à 200°C.

Les débits des deux machines sont réglés de façon à ce que le film obtenu ait une épaisseur d'environ 150 microns pour le $PVF_2$ et 350 microns pour le polyuréthane.

Le film extrudé est reçu entre les cylindres d'une calandre chauffés à 120°C.

On obtient un film composite $PVF_2$-polyuréthane dont les deux couches sont inséparables.

## Exemple 2

On dispose de deux extrudeuses identiques à celles de l'exemple 1. Ces extrudeuses alimentent un répartiteur de flux fixé à une filière permettant de fabriquer un tube. Un conformateur classique de type "interne," légèrement conique et refroidi par circulation d'eau, est fixé à la filière.

De la première machine on extrude dans les mêmes conditions le même $PVF_2$ de l'exemple 1.

De la seconde machine on extrude un mélange, obtenu par regranulation dans une boudineuse, de 35 parties en poids d'un copolymère à base de polyéthylène et d'acide acrylique et de 65 parties en poids du polyuréthane de l'exemple 1. Pour une viscosité apparente du $PVF_2$ à 200°C de $141.10^3$ et $8,8.10^3$ poises pour des gradients de vitesse en $sec^{-1}$ respectivement de 3,5 et 354, la viscosité apparente à 200°C du mélange à base de polyuréthane est respectivement pour ces mêmes gradients de vitesse en $sec^{-1}$ de $9,2.10^3$ et $1,9.10^3$. Les températures de chauffe affichées pour cette extrudeuse sont, en partant de l'entrée, de 170°C—180°C—190°C.

La filière et le répartiteur de flux sont maintenus à 200—210°C.

On obtient un tube composite $PVF_2$-polyuréthane constitué de deux couches parfaitement adhérentes de 0,5 mm d'épaisseur chacune.

## Exemple 3

On opère selon l'exemple 2 mais on adjoint au niveau du répartiteur de flux une troisième extrudeuse identique aux précédentes, alimentée de polyéthylène (LOTREN 3003). Les températures de chauffe affichées sont, en partant de l'entrée, de 180°C—190°C—200°C.

On obtient un tube composite constitué de trois couches qui se présentent dans l'ordre suivant: $PVF_2$—mélange à base de polyuréthane — polyéthylène. Ces couches de polymère adhèrent parfaitement entre elles.

## Revendications

1. Procédé de fabrication par coextrusion d'un matériau composite polyfluorure de vinylidène et polyuréthane permettant une excellente adhérance entre ces deux produits caractérisé en ce que les flux de polyfluorure de vinylidène et de polyuréthane en sortie de deux extrudeuses sont réunis au plus tard au niveau des lèvres d'un filière unique, le polyfluorure de vinylidène extrudé se trouvant dans une gamme de viscosité apparente à 200°C telle qu'il présente au moins pour deux gradients de vitesse du tableau ci-après des viscosités apparentes respectivement incluses entre les deux viscosités apparentes extrêmes indiquées

| Gradient de vitesse $sec^{-1}$ | Valeurs des viscosités apparentes (en poises) | |
|---|---|---|
| | minimum | maximum |
| 3,54 | $30\ 10^3$ | $200\ 10^3$ |
| 11,81 | $18\ 10^3$ | $93\ 10^3$ |
| 35,4 | $11\ 10^3$ | $47\ 10^3$ |
| 118 | $6,5\ 10^3$ | $21\ 10^3$ |
| 354 | $3,9\ 10^3$ | $10\ 10^3$ |
| 1 181 | $2,3\ 10^3$ | $4,5\ 10^3$ |

et le polyréthane extrudé possédant une viscosité apparente à 200°C au maximum quatre fois moindre que celle du polyfluorure de vinylidène pour les gradients de vitesse ayant servi à le définir.

2. Procédé selon la revendication 1 caractérisé en ce qu'on interpose entre les extrudeuses et la filière un répartiteur de flux.

3. Procédé selon l'une des revendications 1 à 2 caractérisé en ce que la température de la filière est comprise entre 180°C et 230°C.

4. Procédé selon l'une des revendications 1 à 3 caractérisé en ce que le polyuréthane thermoplastique est linéaire ou faiblement réticulé.

## Patentansprüche

1. Verfahren zur Herstellung eines Materials aus Vinylidenpolyfluorid und Polyurethan durch Coextrusion mit hervorragender Haftung zwischen beiden Komponenten, dadurch gekennzeichnet, daß die Schmelzflüsse des Vinylidenpolyfluorids und des Polyurethans am Ausgang von zwei Extrudern, spätestens an der Kante einer gemeinsamen Düse vereinigt werden, wobei sich das extrudierte Vinylidenpolyfluorid in einem solchen Bereich der scheinbaren Viskosität bei etwa 200°C befindet, daß es für wenigstens zwei Geschwindigkeitsgradienten der nachstehenden Tabelle scheinbare Viskositäten zwischen den beiden angegebenen Extremen aufweist:

| Geschwindigkeits-gradient sec$^{-1}$ | scheinbare Viskosität in Poise | |
|---|---|---|
| | Minimum | Maximum |
| 3,54 | $30 \cdot 10^3$ | $200 \cdot 10^3$ |
| 11,81 | $18 \cdot 10^3$ | $93 \cdot 10^3$ |
| 35,4 | $11 \cdot 10^3$ | $47 \cdot 10^3$ |
| 118 | $6,5 \cdot 10^3$ | $21 \cdot 10^3$ |
| 354 | $3,9 \cdot 10^3$ | $10 \cdot 10^3$ |
| 1 181 | $2,3 \cdot 10^3$ | $4,5 \cdot 10^3$ |

und daß das extrudierte Polyurethan eine scheinbare Viskosität bei 200°C besitzt, die höchstens viermal kleiner als die des Vinylidenpolyfluorids für die Geschwindigkeitsgradienten ist, die das material definieren.

2. Verfahren nach Anspruch 1, dadurch gekennzeichnet, daß man zwischen die Extruder und die Düse einen Schmelzflußverteiler setzt.

3. Verfahren nach einem der Ansprüche 1 oder 2, dadurch gekennzeichnet, daß die Temperatur der Düse zwischen 180°C und 230°C beträgt.

4. Verfahren nach einem der Ansprüche 1 bis 3, dadurch gekennzeichnet, daß das thermoplastische Polyurethan linear oder leicht vernetzt ist.

## Claims

1. Process for the manufacture, by co-extrusion, of a polyvinylidene fluoride/polyurethane composite material, which permits excellent adhesion between these two products, characterised in that the flow of polyvinylidene fluoride and the flow of polyurethane at the outlet of two extruders are combined, at the latest, at the lips of a single die, the extruded polyvinylidene fluoride having an apparent viscosity, at 200°C, within a range such that the polyvinylidene fluoride possesses, for at least two velocity gradients in the table below, apparent viscosities respectively included between the two extreme apparent viscosities indicated,

| Velocity gradient second$^{-1}$ | Values of the apparent viscosities (in poises) | |
|---|---|---|
| | minimum | maximum |
| 3.54 | $30 . 10^3$ | $200 . 10^3$ |
| 11.81 | $18 . 10^3$ | $93 . 10^3$ |
| 35.4 | $11 . 10^3$ | $47 . 10^3$ |
| 118 | $6,5 . 10^3$ | $21 . 10^3$ |
| 354 | $3,9 . 10^3$ | $10 . 10^3$ |
| 1,181 | $2,3 . 10^3$ | $4,5 . 10^3$ |

and the extruded polyurethane possessing an apparent viscosity, at 200°C, which is at most four times less than that of the polyvinylidene fluoride for the velocity gradients used to define it.

2. Process according to Claim 1, characterised in that a flow divider is placed between the extruders and the die.

3. Process according to one of Claims 1 and 2, characterised in that the temperature of the die is between 180°C and 230°C.

4. Process according to one of Claims 1 to 3, characterised in that the thermoplastic polyurethane is linear or slightly crosslinked.